# EUROPEAN PATENT APPLICATION

(11) **EP 3 386 247 A1**
(43) Date of publication of application: **10.10.2018**
(21) Application number: 16870240.5
(22) Date of filing: 29.08.2016
(51) Int. Cl.: H04W 56/00, H04W 88/08, H04W 92/04

(54) **BASE STATION AND TIMING CONTROL METHOD**

(30) Priority: 30.11.2015 JP 2015233524
(71) Applicant: NTT DOCOMO, INC., Chiyoda-ku Tokyo 100-6150 (JP)
(72) Inventor: UCHINO, Tooru, Tokyo 100-6150 (JP); UMESH, Anil, Tokyo 100-6150 (JP); KIYOSHIMA, Kohei, Tokyo 100-6150 (JP); ABETA, Sadayuki, Tokyo 100-6150 (JP)
(74) Representative: Hoffmann Eitle
(86) International application number: PCT/JP2016/075139
(87) International publication number: WO 2017/094299

(57) **Abstract**

A base station used as a first base station in a radio communication system including the first base station, a second base station communicating via the first base station with a user device, and the user device communicating with the first base station. The base station includes a first receiver that receives an uplink signal transmitted from the user device; a measurer that measures a timing difference between a timing of receiving the uplink signal and a predetermined reference timing retained by the base station; and a first transmitter that transmits, to the user device, a command that is generated based on the timing difference and used to control a transmission timing at which the user device transmits the uplink signal.

## Description

### TECHNICAL FIELD

The present invention relates to a base station and a timing control method.

### BACKGROUND ART

In an LTE (Long Term Evolution) system, in order to efficiently support areas such as hot spots with high traffic, a technology called C-RAN (Centralized Radio Access Network) is being considered. C-RAN enables accommodating a large number of cells while suppressing equipment costs.

C-RAN is composed of one or more remote radio units (RRUs) that are remote base stations and a baseband unit (BBU) that is a base station for centrally controlling the RRUs. The BBU includes layer 1 through layer 3 functions of an eNB (evolved NodeB) that is a base station for LTE. An OFDM (orthogonal frequency division multiplexing) signal generated by the BBU is sampled and transferred to the RRU, and is transmitted from an RF (radio frequency) function of the RRU.

In LTE, time taken by an uplink signal (UL signal) transmitted from a user device to reach a base station varies depending on the distance between the user device and the base station. For this reason, LTE employs a mechanism called a timing alignment (TA) control that enables uplink signals transmitted from user devices to reach the base station at the same timing.

### [RELATED-ART DOCUMENT]

### [Patent Document]

[Patent Document 1] Japanese Laid-Open Patent Publication No. 2014-239439

### DISCLOSURE OF INVENTION

### PROBLEMS TO BE SOLVED BY THE INVENTION

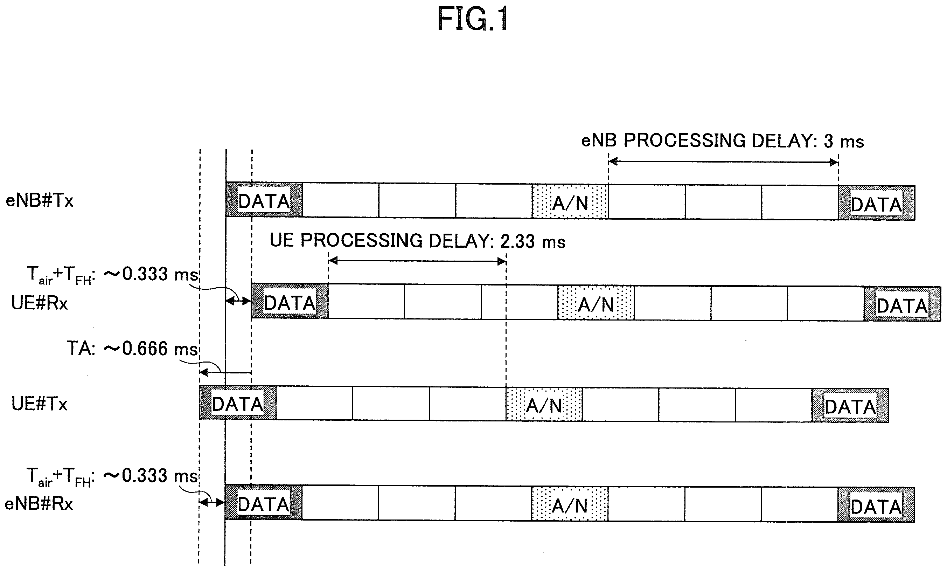

First, to describe specific problems, TA control is briefly described with reference to FIG. 1. A downlink signal (eNB#Tx in FIG. 1) transmitted from a base station reaches a user device (UE#Rx in FIG. 1) with a maximum delay of about 0.333 ms due to a delay (T_{FH}) in a wired section in the base station and a delay (Tₐᵢᵣ) in a wireless section corresponding to the distance between the base station and the user device.

When TA control is not performed, the user device transmits an uplink signal (UL signal) according to the timing when the downlink signal is received. The uplink signal transmitted from the user device reaches the base station with a delay that is the same as the delay of the downlink signal. Accordingly, the uplink signal transmitted from the user device reaches the base station with a maximum delay of about 0.333 ms.

The base station keeps frame timing (reference timing) that is generated based on, for example, a clock of the base station. The base station performs an IFFT (Inverse Fast Fourier Transformation) process according to the frame timing, and transmits a downlink signal (OFDM signal). Also, the base station performs an FFT (Fast Fourier Transformation) process according to the frame timing, and thereby demodulates an uplink signal (SC-FDMA signal) from each user device.

Thus, from the viewpoint of the base station, the frame timing of the base station needs to be synchronized with the timing at which an uplink signal is received from each user device. If the reception timing of an uplink signal is out of synchronization with the frame timing, the base station erroneously recognizes effective symbols and a cyclic prefix (CP) in the uplink signal, and cannot correctly perform the FFT process.

For this reason, the base station measures a difference between the frame timing and the reception timing of an uplink signal, and requests the user device to transmit an uplink signal at earlier timing (UE#Tx in FIG. 1) according to the measurement result, and thereby performs timing control (TA control) so that the frame timing (corresponding to the transmission timing of eNB#Tx in FIG. 1) and the reception timing (eNB#Rx in FIG. 1) of the uplink signal from the user device are synchronized.

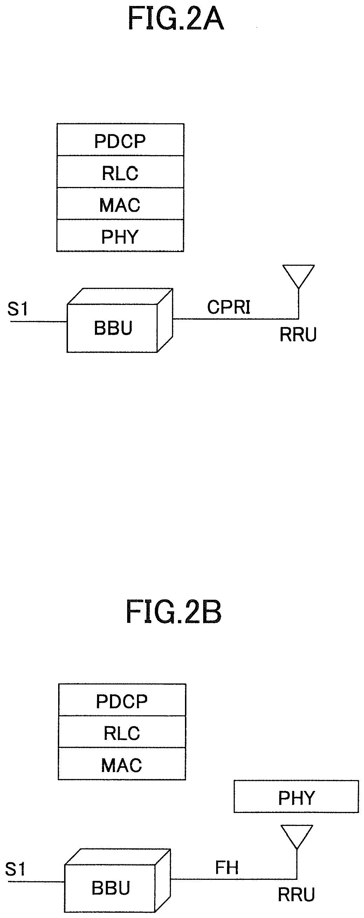

Next, the function sharing between the BBU and the RRU is described with reference to FIGs. 2A and 2B. A network line connecting the BBU and the RRU is called FH (Front Haul).

FIG. 2A illustrates the function sharing between the BBU and the RRU in the current LTE. As illustrated by FIG. 2A, in the current LTE, layer 1 (physical layer: PHY) functions and layer 2 (MAC, RLC, PDCP) functions are implemented in the BBU. Therefore, the transmission rate required for FH is about 16 times greater than the peak rate supported by the BBU. For example, when the system frequency band is 20 MHz and the BBU supports 2 x 2 MIMO (Multi Input Multi Output) radio communication, the transmission rate required for FH (Front Haul) is about 2.4 Gbps.

Currently, in 3GPP, a radio communication technology called 5G is under research to achieve a peak rate of 10 Gbps or greater and to further reduce delay. Various technologies are being studied in 5G. An example of such a technology is called Massive MIMO that uses an antenna including a large number of antenna elements. Introduction of the 5G radio communication technology increases the peak rate and dramatically increases the transmission rate required for FH.

For this reason, it is being considered to reduce the amount of information transmitted via FH by moving a part of the layer functions implemented in the BBU to the RRU. There are various patterns in moving layer functions to the RRU. For example, as illustrated by FIG. 2B, it is being considered to move the physical layer functions of the BBU to the RRU.

The FFT process described above is a function performed in the physical layer. Accordingly, when the physical layer is moved to the RRU as illustrated in FIG. 2B, the FFT control is also performed at the RRU. Also, in order to perform the FFT process correctly, the RRU needs to perform the TA control so that the frame timing and the reception timing of uplink signals from user devices are synchronized with each other.

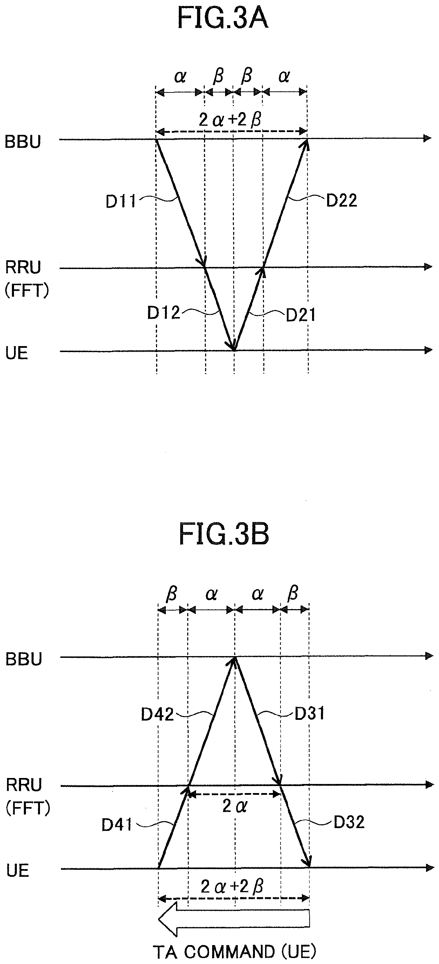

FIGs. 3A and 3B are drawings used to describe problems to be solved. In the current LTE, since the physical layer is implemented in the BBU, it is assumed that the BBU measures a difference (reception timing error) between the frame timing and the timing of receiving an uplink signal from each user device. In the examples of FIGs. 3A and 3B, it is assumed that the delay in the wired section (FH) between the BBU and the RRU is "α" and the delay in the wireless section between the RRU and the UE is "β".

FIG. 3A illustrates a reception timing error measured by the BBU in a case where the TA control is not performed. As illustrated in FIG. 3A, the BBU measures a difference "2α + 2β" between the frame timing (corresponding to the transmission timing of a downlink signal) and the reception timing of an uplink signal. Next, the BBU performs the TA control and requests the user device to advance the transmission timing of the uplink signal by "2α + 2β". As a result, as illustrated in FIG. 3B, the frame timing (corresponding to the transmission timing of the downlink signal) and the reception timing of the uplink signal at the BBU synchronize with each other.

However, when the physical layer is moved to the RRU, the FFT control is also performed at the RRU. That is, as illustrated in FIG. 3B, as a result of performing the TA control at the BBU, the frame timing (corresponding to the transmission timing of the downlink signal at the RRU) managed by the RRU and the reception timing of the uplink signal at the RRU become different from each other by "2α". That is, when the reception timing error of the uplink signal is measured and the TA control is performed by the BBU, the RRU cannot correctly perform the FFT process. As a result, there arises a problem that the BBU and the RRU and the user device cannot normally communicate with each other.

One object of this disclosure is to solve or reduce the above-described problems, and to provide a technology that enables proper communications in a radio communication network according to C-RAN.

### MEANS FOR SOLVING THE PROBLEMS

An aspect of this disclosure provides a base station used as a first base station in a radio communication system including the first base station, a second base station communicating via the first base station with a user device, and the user device communicating with the first base station. The base station includes a first receiver that receives an uplink signal transmitted from the user device; a measurer that measures a timing difference between a timing of receiving the uplink signal and a predetermined reference timing retained by the base station; and a first transmitter that transmits, to the user device, a command that is generated based on the timing difference and used to control a transmission timing at which the user device transmits the uplink signal.

### ADVANTAGEOUS EFFECT OF THE INVENTION

An aspect of this disclosure provides a technology that enables proper communications in a radio communication network according to C-RAN.

### BRIEF DESCRIPTION OF THE DRAWINGS

FIG. 1 is a drawing used to describe TA control;
FIG. 2A is a drawing used to describe function sharing between BBU and RRU;
FIG. 2B is a drawing used to describe function sharing between BBU and RRU;
FIG. 3A is a drawing used to describe a problem;
FIG. 3B is a drawing used to describe a problem;
FIG. 4 is a drawing illustrating an example of a configuration of a radio communication system according to an embodiment;
FIG. 5 is a sequence chart illustrating a process performed by a radio communication system according to an embodiment;
FIG. 6A is a drawing used to describe TA control according to an embodiment;
FIG. 6B is a drawing used to describe TA control according to an embodiment;
FIG. 7 is a sequence chart illustrating a process (first variation) performed by a radio communication system according to an embodiment;
FIG. 8A is a drawing illustrating an RA procedure;
FIG. 8B is a drawing illustrating an RA procedure;
FIG. 9 is a drawing used to describe a new problem;
FIG. 10 is a drawing used to describe a reception timing error observed by BBU.
FIG. 11A is a drawing used to describe an available processing time of BBU;
FIG. 11B is a drawing used to describe an available processing time of BBU;
FIG. 12 is a sequence chart illustrating a process where BBU requests RRU to perform timing adjustment according to an embodiment;
FIG. 13 is a drawing used to describe an example of TA control performed between BBU and RRU;
FIG. 14 is a drawing illustrating an example of a functional configuration of RRU according to an embodiment;
FIG. 15 is a drawing illustrating an example of a functional configuration of BBU according to an embodiment;
FIG. 16 is a drawing illustrating an example of a hardware configuration of RRU according to an embodiment; and
FIG. 17 is a drawing illustrating an example of a hardware configuration of BBU according to an embodiment.

### DESCRIPTION OF EMBODIMENTS

Embodiments of the present invention are described below with reference to the accompanying drawings. Embodiments described below are examples, and the present invention is not limited to those embodiments. For example, although it is assumed that a radio communication system according to the embodiments conforms to LTE, the present invention is not limited to LTE and may also be applied to other types of systems. In the specification and the claims of the present application, "LTE" is used in a broad sense and may indicate not only a communication system corresponding to 3GPP release 8 or 9, but also a fifth-generation communication system corresponding to 3GPP release 10, 11, 12, 13, 14, or later.

In the descriptions below, it is assumed that the length of one subframe is 1 ms. However, this is just an example. The present invention may also be applied to a radio communication system where the length of one subframe is other than 1 ms.

### <SYSTEM CONFIGURATION, OUTLINE>

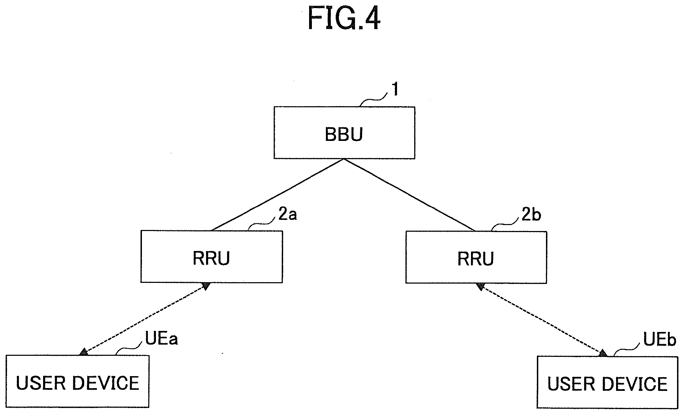

FIG. 4 is a drawing illustrating an example of a configuration of a radio communication system according to an embodiment. As illustrated by FIG. 4, the radio communication system of the present embodiment includes a BBU 1, an RRU 2a, an RRU 2b, a user device UEa, and a user device UEb. Although the radio communication system of FIG. 4 includes the RRU 2a and the RRU 2b, the radio communication system may include one RRU or three or more RRUs, Similarly, although the radio communication system of FIG. 4 includes the user device UEa and the user device UEb, the radio communication system may include one user device or three or more user devices. In the descriptions below, the RRU 2a and the RRU 2b may be collectively referred to as a "RRU 2" when distinction is not necessary. Also, the user device UEa and the user device UEb may be collectively referred to as a "user device UE" when distinction is not necessary.

The BBU 1 and the RRUs 2 are connected to each other via FH, and communicate with each other using a predetermined frame protocol used for FH. In the present embodiment, any protocol may be used as the predetermined frame protocol.

Each of the RRU 2a and the RRU 2b forms one or more cells (macrocells or small cells). The BBU 1 may form one or more cells (for example, macrocells). The BBU 1 may include a function to select two or more cells from the cells formed by itself, the cells formed by the RRU 2a, and the cells formed by the RRU 2b, and to set CA (carrier aggregation) in the user device UE.

In the present embodiment, It is assumed that the RRU 2 includes physical layer functions. Also, in the radio communication system of the present embodiment, functions are shared such that physical layer functions are performed by the RRU 2, and layer 2 and layer 3 functions are performed by the BBU 1. Hereinafter, this function sharing is referred to as "PHY Split C-RAN".

The BBU 1 may or may not include physical layer functions. Also, the BBU 1 may be an eNB (enhanced Node B) that can perform functions described in the present embodiment. The BBU 1 of the present embodiment may be referred to as a central base station or may be simply referred to as a base station. The RRU 2 of the present embodiment may be referred to as a remote base station or an RRH (Remote Radio Head), or may be simply referred to as a base station.

As described with reference to FIGs. 3A and 3B, when the reception timing error of the uplink signal is measured and the TA control is performed by the BBU 1, the RRU 2 cannot correctly perform the FFT process. As a result, the BBU 1 and the RRU 2 and the user device cannot normally communicate with each other. For this reason, in the radio communication system of the present embodiment, the RRU 2 measures a reception timing error of an uplink signal from the user device UE and performs TA control so that the RRU2 can correctly perform the FFT process.

### <PROCESSES>

### (TA CONTROL)

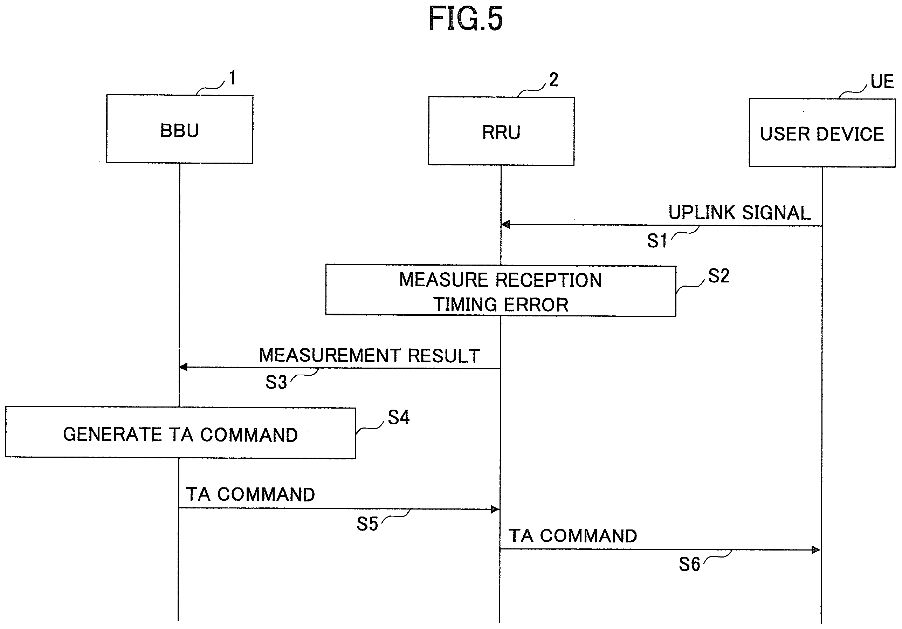

FIG. 5 is a sequence chart illustrating a process performed by the radio communication system according to an embodiment. TA control performed by the radio communication system of the embodiment is described with reference to FIG. 5.

At step S1, the user device UE transmits an uplink signal to the RRU 2.

At step S2, the RRU 2 compares frame timing (reference timing) generated by, for example, a clock of the RRU 2 with the reception timing of the uplink signal from the user device UE, and thereby measures a reception timing error. The frame timing (reference timing) may be, for example, the timing of a subframe boundary.

For example, the RRU 2 may be configured to compare the actual reception timing of a sounding reference signal (SRS) included in the uplink signal received from the user device UE with SRS reception timing estimated based on the frame timing recognized by the RRU 2 itself to measure a reception timing error. Also, the RRU 2 may measure a reception timing error based on a physical channel such as a physical uplink control channel (PUCCH), a physical uplink shared channel (PUSCH), or a physical random access channel (PRACH).

The RRU 2 may be configured to continuously perform step S2 or to perform step S2 at predetermined intervals. Also, the RRU 2 may be configured to perform step S2 when triggered by an event, i.e., at the timing when a specific uplink signal (e.g., PUCCH, SRS) is received from the user device UE.

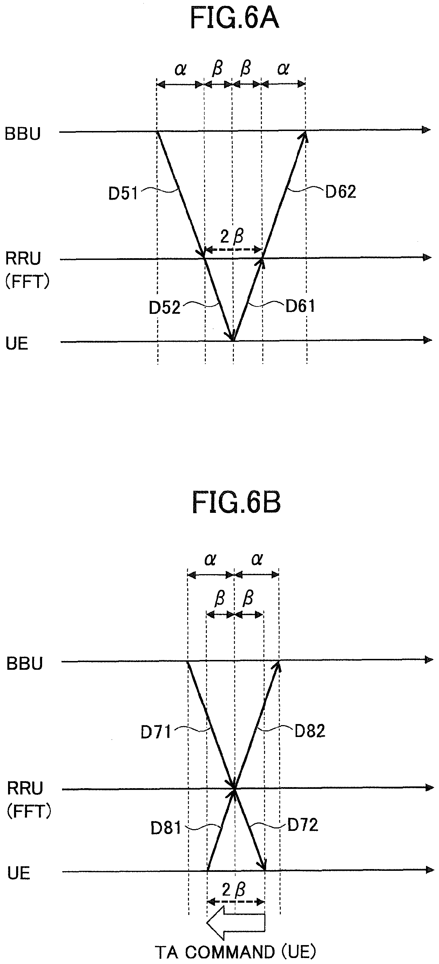

FIG. 6A illustrates a reception timing error measured by the RRU 2 in a case where TA control is not performed. The RRU 2 transmits a downlink signal (D52) according to its frame timing. When TA control is not performed, the user device UE transmits an uplink signal (D61) at the timing when the downlink signal (D52) is received. Accordingly, the RRU 2 measures a reception timing error of "2β" that is a sum of a delay time (β) taken by the downlink signal (D52) to reach the user device UE and a delay time (β) taken by the uplink signal (D61) to reach the RRU 2.

Referring back to FIG. 5, at step S3, the RRU 2 reports (feeds back) the measurement result of the reception timing error to the BBU 1 using a predetermined frame protocol used for FH. The RRU 2 may be configured to report, together with the measurement report, an identifier of the user device UE (e.g., C-RNTI (Cell-Radio Network Temporary Identifier) or temporary C-RNTI), the type of an uplink signal (e.g., SRS, PUCCH, PUSCH, or PRACH) used for the measurement of the reception timing error, and information (e.g., a system frame number (SFN), a subframe number, or a slot number) indicating the time when the reception timing error is measured. Also, when the reception timing error is measured using PRACH, the RRU 2 may also report an identifier (e.g., a preamble index, a preamble number, or a random access-RNTI (RA-RNTI)) corresponding to a RACH resource and a PRACH group identifier (a PRACH group identifier for identifying the type of the user device UE).

The RRU 2 may report the reception timing error to the BBU 1 by using an actual difference value (e.g., in psec or sec) or a timing advance command index defined by the 3GPP specifications (TS36.321, TS36.213).

The RRU 2 may report the measurement result to the BBU 1 at the timing when the reception timing error is measured at step S2, at predetermined intervals, or only when a reception timing error of a specific uplink signal (e.g., PUCCH or SRS) is measured. Also, the RRU 2 may be configured to always report a measurement result when a reception timing error of an RA procedure signal is measured.

Also, when the TA timer is infinite (i.e., in a cell where the transmission timing of an uplink signal does not greatly shift), the RRU 2 may report a measurement result only when a reception timing error of an RA procedure signal is measured.

At step S4, the BBU 1 generates a TA command based on the reported measurement result. The BBU 1 may be configured to generate a TA command every time when a measurement result is reported at step S3, or to generate a TA command only when the reported measurement result is greater than or equal to a predetermined threshold (i.e., when the reception timing error is greater than or equal to the predetermined threshold). This makes it possible to reduce the amount of signaling.

At step S5, the BBU 1 transmits the generated TA command to the RRU 2. At step S6, the RRU 2 transmits the TA command received at step S5 to the user device UE.

The BBU 1 may generate a MAC PDU including a timing advance command medium access control element (TA command MAC CE) and transmit the MAC PDU to the RRU 2 (S5), and the RRU 2 may transmit the received MAC PDU to the user device UE without change (S6). Also, the BBU 1 may transmit the TA command to the RRU 2 using a predetermined frame protocol (S5), and the RRU 2 may generate a MAC PDU including a TA command MAC CE based on the received TA command and transmit the MAC PDU to the user device UE (S6).

FIG. 6B illustrates a state where the reception timing error measured at the RRU 2 is corrected as a result of the TA control described above.

### (FIRST VARIATION OF TA CONTROL)

In the TA control described with reference to FIG. 5, the BBU 1 generates a TA command. However, when the TA command is generated every time by the BBU 1, the TA control for the user device UE delays due to the time necessary for the step (S3) of reporting the measurement result from the RRU 2 to the BBU 1 and the step (S5) of transmitting the TA command from the BBU 1 to the RRU 2.

For this reason, in the radio communication system of this variation, TA control may be performed solely by the RRU 2 so that TA control can be quickly performed for the user device UE.

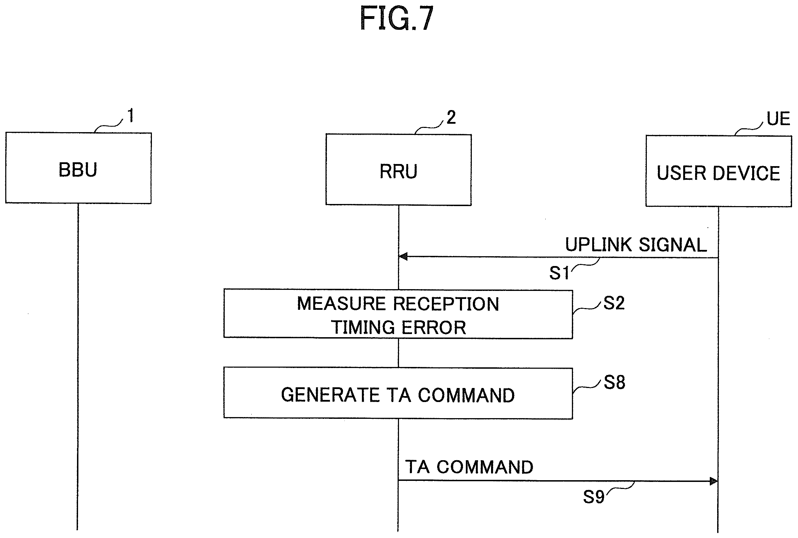

FIG. 7 is a sequence chart illustrating a process (first variation) performed by the radio communication system of an embodiment.

Steps S1 and S2 are substantially the same as steps S1 and S2 of FIG. 5, and therefore their descriptions are omitted here.

At step S8, the RRU 2 generates a TA command based on the measurement result of a reception timing error. The RRU 2 may be configured to generate a TA command every time when a reception error is measured at step S2, or to generate a TA command only when the measurement result is greater than or equal to a predetermined threshold (i.e., when the reception timing error is greater than or equal to the predetermined threshold). This makes it possible to reduce the amount of signaling.

At step S9, the RRU 2 transmits the generated TA command to the user device UE. The RRU 2 may generate a MAC PDU including a TA command MAC CE based on the generated TA command and transmit the MAC PDU to the user device UE.

The first variation of the TA control is described above. The RRU 2 may be configured to perform a process according to the first variation of the TA control illustrated by FIG. 7 when an instruction to perform the process according to the first variation of the TA control is received from the BBU 1, and to perform a process according to the TA control described with reference to FIG. 5 when the instruction is not received. The BBU 1 may be configured to transmit the instruction to the RRU 2 in response to any appropriate trigger. For example, when the number of user devices UE, for which reception timing errors greater than or equal to the predetermined threshold are reported at step S3 of FIG. 3 is greater than a predetermined value, the BBU 1 may determine that there are a large number of user devices UE moving at high speed, and instruct the RRU 2 to perform a process according to the first variation of the TA control.

The BBU 1 may instruct the RRU 2 to perform a process according to the first variation of the TA control in the unit of RRU 2 or in a smaller unit (cell, carrier, cell type (macrocell or small cell), or user device UE). The RRU 2 performs a process according to the first variation of the TA control in an unit specified by the BBU 1.

Also, the RRU 2 may be configured to perform a process according to the first variation of the TA control illustrated in FIG. 7 when the reception timing error measured at step S2 is greater than or equal to a predetermined threshold and to perform a process according to the TA control illustrated in FIG. 5 when the reception timing error measured at step S2 is less than the predetermined threshold. With this configuration, when the reception timing error regarding a specific user device UE is large, it is possible to quickly suppress the interference with an uplink signal transmitted from another user device UE.

### (SECOND VARIATION OF TA CONTROL)

The RRU 2 may be configured to measure the reliability of an uplink signal received at step S1 of FIG. 5, and to report the measurement result of the reception timing error to the BBU 1 at step S3 of FIG. 5 when the measured reliability is greater than or equal to a predetermined threshold. The reliability may be represented by, for example, the level of the received power of the uplink signal or the reception quality level of the uplink signal.

Similarly, the RRU 2 may be configured to measure the reliability of an uplink signal received at step S1 of FIG. 7, and to generate a TA command at step S8 when the measured reliability is greater than or equal to a predetermined threshold.

The predetermined threshold may be preset, for example, in a memory of the RRU 2, or may be reported from the BBU 1. The BBU 1 may be configured to report the predetermined threshold in advance to the RRU2 in the unit of RRU 2 (i.e., to report one predetermined threshold to each RRU 2), or to report the predetermined threshold in a smaller unit (cell, carrier, cell type (macrocell or small cell), user device UE, or the type of uplink signal (e.g., physical channel type)). The RRU 2 measures the reliability of an uplink signal by using the predetermined threshold reported from the BBU 1.

As another example, the RRU 2 may be configured to measure the reliability of an uplink signal received at step S1 of FIG. 5, and to report the measurement result of the reception timing error and the measured reliability to the BBU 1 at step S3 of FIG. 5. In this case, the BBU 1 may be configured to generate a TA command at step S4 of FIG. 5 when the reliability reported from the RRU 2 is greater than or equal to a predetermining threshold.

According to the second variation of the TA control described above, a TA command is generated and transmitted by the BBU 1 or the RRU 2 only when the reliability of an uplink signal is greater than a predetermined threshold.

### (CONGESTION AVOIDANCE CONTROL IN RA PROCEDURE)

When a large number of user devices UE perform the RA procedure at the same time, the processing load of the base station eNB increases and it may become difficult for the base station eNB to continue providing a communication service. Also, in this case, it may become difficult to continue providing not only a communication service for normal users but also an important communication service such as an emergency call.

To solve such a problem, a base station eNB in LTE includes a function to perform congestion avoidance control to limit a part or all of RA procedures requested by user devices UE.

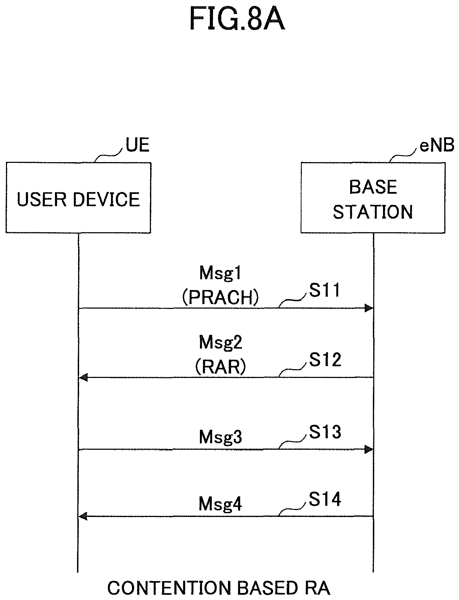

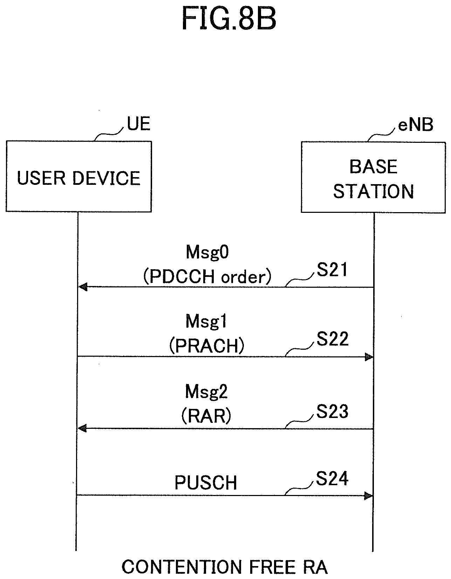

FIGs. 8A and 8B illustrate RA procedures. FIG. 8A illustrates a contention based RA procedure, and FIG. 8B illustrates a contention free RA procedure. As the congestion avoidance control, the base station eNB, for example, includes a function to limit the number of messages 1 (S11/S22) to be received (or processed) to a predetermined number, and to discard messages 1 exceeding the predetermined number. Also, the base station eNB includes a function to limit the number of messages 2 (S12/S23) and messages 4 (S14) to be transmitted at the same time, and a function to limit the number of messages 3 (S13) to be received (or processed) to a predetermined number and to discard messages 3 exceeding the predetermined number.

In the radio communication system of the present embodiment, transmission and reception of messages are performed by the RRU 2. Accordingly, the RRU 2 of the present embodiment preferably has a processing capacity to cope with a situation where RA procedures are performed by a large number of user devices UE at the same time. However, providing such a processing capacity to the RRU 2 increases the development costs of the RRU 2.

For this reason, the RRU 2 of the present embodiment may include a function to perform congestion avoidance control for RA procedures.

More specifically, the RRU 2 may be configured to limit the number of messages 1 (S11/S22) to be received (or processed) within a predetermined time period to a predetermined number (threshold), and to discard messages 1 received in excess of the predetermined number. Also, the RRU 2 may be configured to limit the number of messages 2 (S12/S23) that can be transmitted within a predetermined time period to a predetermined number (threshold). Also, the RRU 2 may be configured to limit the number of messages 4 (S14) that can be transmitted within a predetermined time period to a predetermined number (threshold). Also, the RRU 2 may be configured to limit the number of messages 3 (S13) to be received (or processed) within a predetermined time period to a predetermined number, and to discard messages 3 received in excess of the predetermined number.

Further, the RRU 2 may be configured to start the congestion avoidance control in response to an instruction received from the BBU 1. For example, the BBU 1 may instruct the RRU 2 to start the congestion avoidance control when an increase in the processing load of the BBU 1 itself is detected (when congestion is detected).

Also, the RRU 2 may determine parameters (unit time, predetermined numbers, etc.) for the congestion avoidance control based on, for example, a configuration file stored in a memory, or based on the processing capacity of the RRU 2 itself, the bandwidth of FH, the processing capacity of a predetermined frame protocol used for FH, and/or the processing capacity of the BBU 1. Also, the BBU 1 may be configured to transmit various parameters for the congestion avoidance control to the RRU 2 when instructing the RRU 2 to start the congestion avoidance control.

Also, the RRU 2 may be configured to report, to the BBU 1, that the congestion avoidance control has been performed (e.g., messages 1 or messages 3 have been discarded, or the number of messages 2 or messages 4 to be transmitted has been limited).

Also, the RRU 2 may be configured to perform the congestion avoidance control only for a predetermined time period. For example, the RRU 2 may stop the congestion avoidance control after a predetermined time period from the time when the congestion avoidance control is started.

Also, the RRU 2 may be configured to perform the congestion avoidance control only for the contention based RA procedures. That is, the RRU 2 may be configured to perform the congestion avoidance control only for messages 1 through 4 illustrated in FIG. 8A.

Also, when the number of messages 1 received in a predetermined time period exceeds a predetermined number (threshold), the RRU 2 may receive (or process) messages 1 in descending order of priority or discard messages 1 in ascending order of priority. Similarly, when the number of messages 3 received in a predetermined time period exceeds a predetermined number (threshold), the RRU 2 may receive (or process) messages 3 in descending order of priority or discard messages 3 in ascending order of priority.

For example, the priority levels of messages 1 and messages 3 may be associated with the types of user devices UE (normal user device UE, machine type communication (MTC) UE, etc.), or associated with the service types or QoS class identifiers (QCI) of data to be transmitted by the user devices UE. The user device UE may be configured to include an identifier indicating a priority level in a message 1 or a message 3, and the RRU 2 may be configured to determine the priority level of the message 1 or the message 3 based on the identifier included in the message 1 or the message 3. Also, the correspondence between ranges of preamble indices and priority levels may be predetermined, and the RRU 2 may determine the priority level based on the index of a preamble transmitted as a message 1. Also, the correspondence between ranges of radio resources used for transmission of preambles and priority levels may be predetermined, and the RRU 2 may determine the priority level based on the radio resource used to receive a preamble transmitted as a message 1.

Also, when the congestion avoidance control is performed or the processing load of the RRU 2 itself exceeds a predetermined value (e.g., when it is determined that the possibility of congestion is high), the RRU 2 may transmit a message 2 or a message 4 including a backoff timer to the user device UE. In this case, the user device UE does not start the next RA procedure until the backoff timer elapses. Accordingly, this approach makes it possible to prevent a situation where a large number of user devices UE repeatedly start RA procedures in a burst.

### (TA CONTROL BETWEEN BBU AND RRU)

The BBU 1 includes a function to perform scheduling for multiple cells formed by RRUs 2 connected to the BBU 1. The BBU 1 can optimally allocate resources to each cell taking into account the scheduling status in the cell, and thereby improve the radio resource use efficiency in the entire radio communication system.

To enable the BBU 1 to perform optimal resource allocation, feedback (e.g., ACK/NACK) on downlink signals needs to be reported at appropriate timing to the BBU 1 from user devices UE in each cell.

However, in the TA control described above, the RRU 2 adjusts the transmission timing of an uplink signal from the user device UE according to the frame timing of the RRU 2, and the delay time (transmission delay in FH) taken by an FFT-processed uplink signal to reach the BBU 1 is not considered.

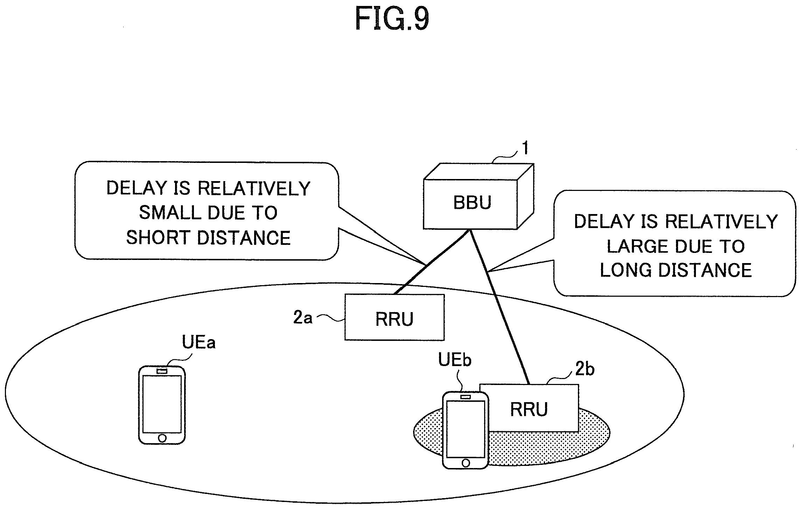

FIG. 9 is a drawing used to describe a new problem. In a C-RAN configuration illustrated by FIG. 9, it is assumed that the RRU 2a is installed in a location close to the BBU 1 and the RRU 2b is installed in a location far from the BBU 1. It is also assumed that the user device UEa is communicating with the RRU 2a, and the user device UEb is communicating with the RRU 2b.

In the C-RAN illustrated by FIG. 9, because the transmission delay between the BBU 1 and the RRU 2a is different from the transmission delay between the BBU 1 and the RRU 2b, uplink signals (feedback) transmitted from the user devices UE reach the BBU 1 at timings that differ by the difference between the transmission delays.

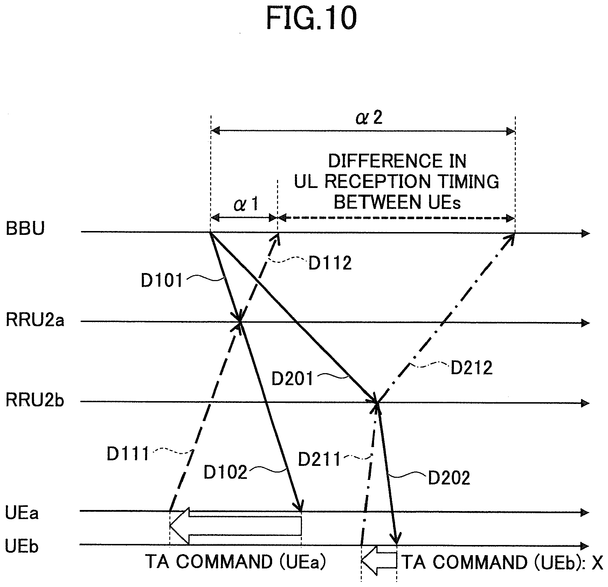

More specifically, as illustrated in FIG. 10, the RRU 2a performs TA control for the user device UEa according to the frame timing of the RRU 2a. In this case, an uplink signal (D111) transmitted from the user device UEa is FFT-processed by the RRU 2a, and the FFT-processed uplink signal (D112) reaches the BBU 1 with a delay of "α1" from the frame timing (reference timing, i.e., the transmission timing of a downlink signal (D101/D201)) of the BBU 1. On the other hand, the RRU 2b performs TA control for the user device UEb according to the frame timing of the RRU 2b. In this case, an uplink signal (D211) transmitted from the user device UEb is FFT-processed by the RRU 2b, and the FFT-processed uplink signal (D212) reaches the BBU 1 with a delay of "α2" from the frame timing of the BBU 1. Thus, the uplink signal (D212) from the user device UEb reaches the BBU 1 with a further delay of "α2-α1" after the uplink signal (D112) from the user device UEa reaches the BBU 1.

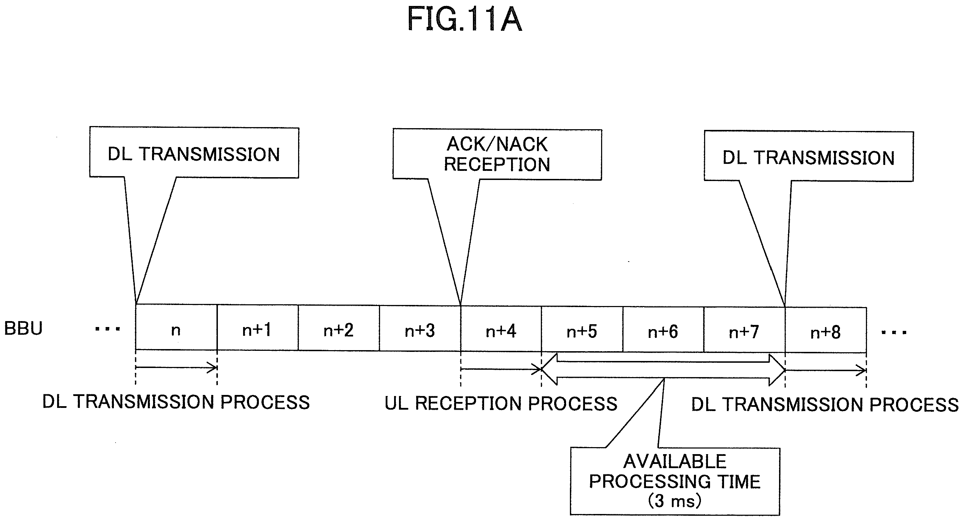

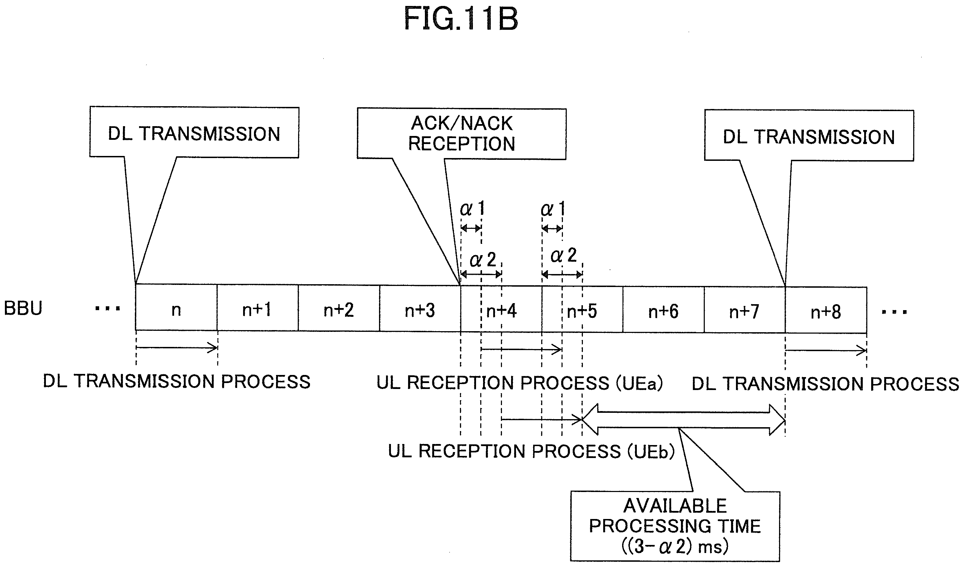

FIGs. 11A and 11B are drawings used to describe an available processing time available for the BBU 1. Here, in LTE, it is defined that the base station eNB receives ACK/NACK for a downlink signal from a user device UE in a subframe that is after 4 ms from a subframe where the bases station eNB transmits the downlink signal. Also, it is defined that based on the received ACK/NACK, the base station eNB performs a scheduling process for transmitting a next downlink signal in a subframe after at least 4 ms (or after 4 ms or more), and transmits the next downlink signal in the subframe after 4 ms (or after 4 ms or more). Thus, a minimum interval between a time when the base station eNB transmits a downlink signal and a time when the base station eNB transmits the next downlink signal is 4 ms + 4 ms = 8 ms. The interval of 8 ms is referred to as a MAC round trip time (RTT).

FIG. 11A illustrates an available processing time that is available for the BBU 1 to perform the scheduling process when it is assumed that there is no transmission delay in FH. As illustrated in FIG. 11A, after transmitting a downlink signal to the user device UE at the timing of a subframe "n", the BBU 1 performs a reception process of ACK/NACK for the downlink signal transmitted at the timing of the subframe "n" in a period (1 ms) of a subframe "n+4". Accordingly, assuming that the next downlink signal is to be transmitted at the timing of a subframe "n+8", an available processing time available for the BBU 1 to perform the scheduling process is 3 ms.

FIG. 11B illustrates an available processing time that is available for the BBU 1 to perform the scheduling process when it is assumed that there is a transmission delay in FH. As illustrated in FIG. 11B, after transmitting downlink signals to the user device UEa and the user device UEb at the timing of a subframe "n", the BBU 1 performs reception processes of ACK/NACK at the timings obtained by adding transmission delays in FH to the timing of the subframe "n+4". More specifically, the ACK/NACK (ACK/NACK that is FFT-processed by the RRU 2a) from the user device UEa reaches the BBU 1 at a timing that is delayed by "α1" from the boundary between the subframe "n+3" and the subframe "n+4". Accordingly, the BBU 1 performs the reception process of the ACK/NACK from the user device UEa in a period obtained by shifting the subframe "n+4" by "α1".

Also, the ACK/NACK (ACK/NACK that is FFT-processed by the RRU 2b) from the user device UEb reaches the BBU 1 at a timing that is delayed by "α2" from the boundary between the subframe "n+3" and the subframe "n+4". Accordingly, the BBU 1 performs the reception process of the ACK/NACK from the user device UEb in a period obtained by shifting the subframe "n+4" by "α2".

As described above, to perform optimal resource allocation for the cells, it is preferable for the BBU 1 to start the scheduling process after receiving all ACK/NACKs for the downlink signals transmitted to the user devices UE at the timing of the subframe "n".

That is, in the example of FIG. 11B, the BBU 1 preferably starts the scheduling process after receiving the ACK/NACKs from both of the user device UEa and the user device UEb. In this case, assuming that the next downlink signals are to be transmitted to the user device UEa and the user device UEb at the timing of a subframe "n+8", an available processing time available for the BBU 1 to perform the scheduling process is reduced to "3-α2" ms.

When the transmission delay in FH is very small compared to MAC RTT, the influence of the transmission delay in FH on the BBU 1 may be ignorable. However, when the transmission delay in FH is large or it is assumed that MAC RTT is reduced in the future, the available processing time available for the BBU 1 to perform the scheduling process is reduced. This may in turn increase the performance required for the BBU 1 and increase the costs of the BBU 1.

For this reason, in the radio communication system of the present embodiment, the BBU 1 instructs the RRUs 2 to adjust a TA-controlled timing so that a predetermined amount of available processing time is secured for the BBU 1 to perform the scheduling process.

More specifically, taking into account an available processing time that needs to be secured for the BBU 1 to perform the scheduling process, the BBU 1 manages a time (hereinafter "maximum wait time (T)") that starts from the frame timing (reference timing) of the BBU 1 and within which the reception of uplink signals from user devices UE (for which the BBU 1 performs scheduling) needs to be completed. Also, when the time needed to complete the reception of uplink signals from the RRUs 2 connected to the BBU 1 exceeds the maximum wait time (T), the BBU 1 instructs the RRUs 2 to advance the transmission of uplink signals from the user devices UE belonging to the RRUs 2 by a specified amount of time so that the uplink signals can be received within the maximum wait time (T).

Here, when the BBU 1 is enabled to instruct the RRU 2 to adjust the TA-controlled timing, the frame timing of the RRU 2 and the reception timing of an uplink signal from the user device UE become out of synchronization. For this reason, in a process described below, the RRU 2 separately manages a frame timing (reference timing) for downlink signal transmission and a frame timing (reference timing) for uplink signal reception. Also, the RRU 2 performs the TA control (including the first variation and the second variation) described with reference to FIGs. 5 through 7 based on the frame timing for the uplink signal reception.

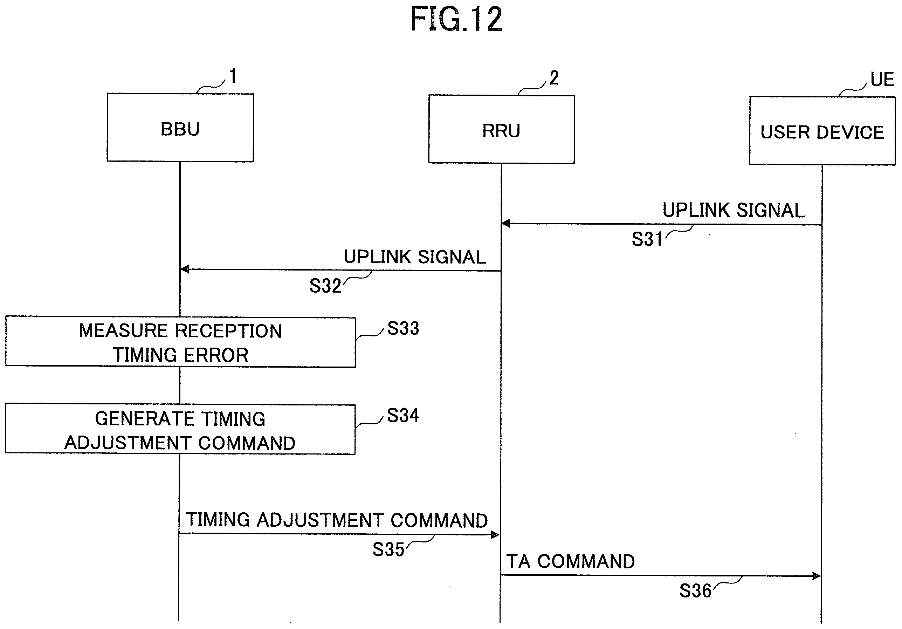

FIG. 12 is a sequence chart illustrating a process where BBU requests RRU to perform timing adjustment according to an embodiment.

At step S31, the user device UE transmits an uplink signal.

At step S32, the RRU 2 performs the FFT process on the uplink signal received from the user device UE, and transmits the FFT-processed uplink signal to the BBU 1.

At step S33, the BBU 1 compares a frame timing (reference timing) of the BBU 1 with the reception timing of the uplink signal from the user device UE, and thereby measures a reception timing error. The BBU 1 may also be configured to compare its frame timing with a reference signal (e.g., a pilot signal) included in a predetermined frame protocol used for FH to measure a reception timing error. The BBU 1 may also use any other appropriate method to measure a reception timing error.

Also, the RRU 2 may be configured to include a reception timing measurement signal in the predetermined frame protocol used for FH and transmit the reception timing measurement signal to the BBU 1, and the BBU 1 may be configured to measure a reception timing error using the reception timing measurement signal. The reception timing measurement signal may be transmitted, for example, at the timing of a subframe boundary or transmitted in response to a trigger.

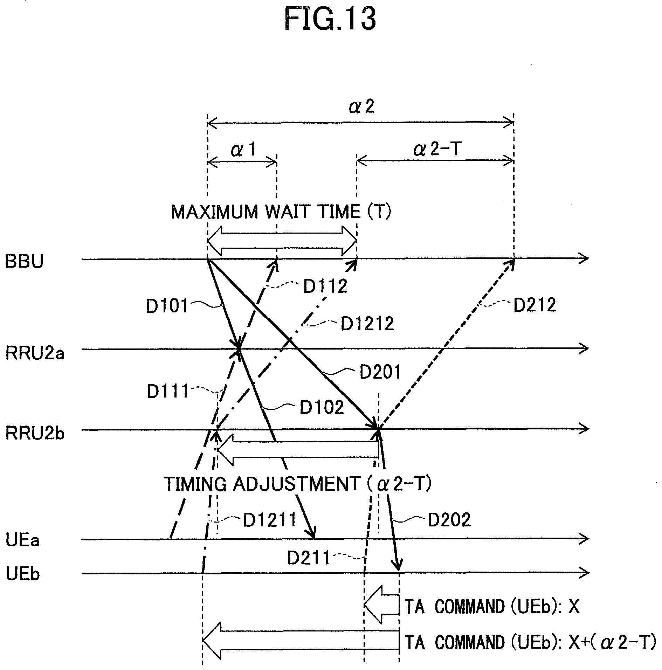

An example of this embodiment is described with reference to FIG. 13. In FIG. 13, the same reference numbers as those used in FIG. 10 are assigned to the corresponding elements.

When there is no timing adjustment instruction from the BBU 1 to the RRU 2a and the RRU 2b, each of the RRU 2a and the RRU 2b performs the TA control for the user device UE based on its own frame timing. In this case, an uplink signal (D111) transmitted from the user device UEa is FFT-processed by the RRU 2a, and the FFT-processed uplink signal (D112) reaches the BBU 1 with a delay of "α1" from the frame timing of the BBU 1. That is, at step S33 of FIG. 12, the BBU 1 measures a reception timing error "α1" for the uplink signal from the user device UEa. Similarly, an uplink signal (D211) transmitted from the user device UEb is FFT-processed by the RRU 2b, and the FFT-processed uplink signal (D212) reaches the BBU 1 with a delay of "α2" from the frame timing of the BBU 1. That is, at step S33 of FIG. 12, the BBU 1 measures a reception timing error "α2" for the uplink signal from the user device UEb.

Referring back to FIG. 12, at step S34, when it is determined that a reception timing error measured at step S33 is greater than the maximum wait time (T), the BBU 1 generates a timing adjustment command that instructs each user device UE belonging to the RRU 2 to further advance the transmission timing of the uplink signal, which is controlled by the TA control performed by the RRU 2, by a specified amount of time.

An example is described with reference to FIG. 13. In the example of FIG. 13, the reception timing error "α2" of the uplink signal from the user device UEb is greater than the maximum wait time (T) retained by the BBU 1. Accordingly, the BBU 1 generates a timing adjustment command that instructs each user device UE belonging to the RRU 2b to further advance the transmission timing of the uplink signal, which is controlled by the TA control performed by the RRU 2b, by "α2-T".

The timing adjustment command may include an amount of time by which the transmission timing is advanced or an index indicating the amount of time. For the index, TA command indices defined by the 3GPP standards (TS36.321, TS36.213) may be used.

At step S35, the BBU 1 transmits the timing adjustment command to the RRU 2.

At step S36, the RRU 2 generates a TA command (or a MAC PDU including a TA command MAC CE) indicating a transmission timing obtained by adding the amount of time indicated by the timing adjustment command to the transmission timing determined by the TA control described with reference to FIGs. 5 through 7, and transmits the generated TA command to the user device UE.

An example is described with reference to FIG. 13. In the example of FIG. 13, the BBU 1 transmits, to the RRU 2b, a timing adjustment command that instructs the user device UE belonging to the RRU 2b to advance the transmission of the uplink signal by "α2-T". The RRU 2b generates a TA command (TA command (UEb): X+(α2-T)) indicating a timing that is obtained by advancing a TA-controlled timing (X in FIG. 13), which is controlled according to the frame timing used for uplink signal reception, by "α2-T", and transmits the TA command to the user device UEb. As a result, an uplink signal (D1212), which is obtained by FFT-processing an uplink signal (D1211) from the user device UEb by the RRU 2b, reaches the BBU 1 at a timing that is earlier than the uplink signal (D212) by "α2-T" (in other words, at a timing that is delayed by a time "T" from the frame timing of the BBU 1). Thus, the BBU 1 can receive the uplink signal (D112) from the user device UEa and the uplink signal (D1212) from the user device UEb within the maximum wait time (T).

As another method for step S36, the RRU 2 may be configured to report the amount of time indicated by the timing adjustment command to the user device UE belonging to the RRU 2 by using a signal different from the TA command, and the user device UE may be configured to transmit an uplink signal at a timing obtained by advancing the transmission timing indicated by the TA command by the amount of time indicated by the signal.

For example, the RRU 2 may be configured to transmit broadcast information (SIB) including the amount of time indicated by the timing adjustment command. In this case, the user device UE can determine the amount of time by which the TA-controlled timing needs to be advanced based on the broadcast information.

Also, a new RNTI may be defined in advance, and the RRU 2 may be configured to include the amount of time indicated by the timing adjustment command in a common search space of PDCCH. In this case, the user device UE can determine the amount of time by which the TA-controlled timing needs to be advanced by performing blind detection on the common search space using the new RNTI.

The TA control between the BBU and the RRU is described above. The name "timing adjustment command" is just an example, and a command for this purpose may have any other name.

### (VARIATION OF TA CONTROL BETWEEN BBU AND RRU)

The BBU 1 may be configured to measure the reliability of an uplink signal received at step S32 of FIG. 12, and to generate a timing adjustment command at step S34 of FIG. 12 when the measured reliability is greater than or equal to a predetermined threshold. The reliability may be represented by, for example, the level of the received power of the uplink signal received via FH or the reception quality level of the uplink signal received via FH.

With this configuration, a timing adjustment command is generated and transmitted by the BBU 1 only when the reliability of an uplink signal is greater than a predetermined threshold.

### <FUNCTIONAL CONFIGURATIONS>

### (RRU)

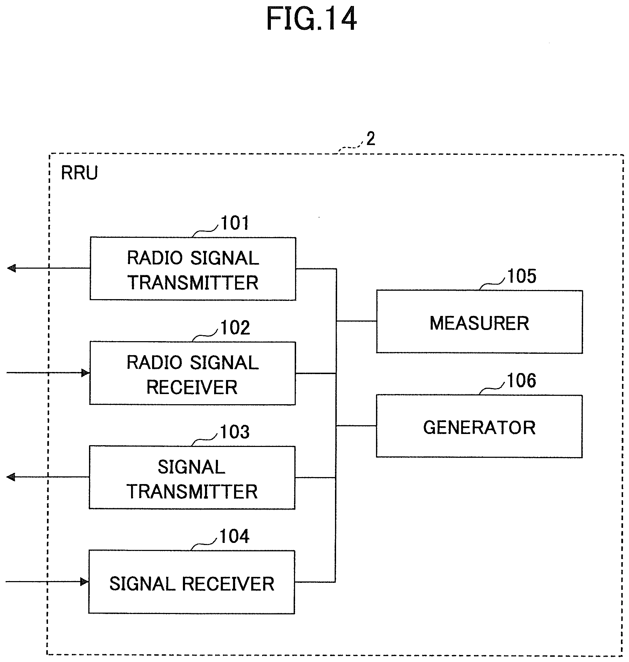

FIG. 14 is a drawing illustrating an example of a functional configuration of an RRU according to an embodiment. As illustrated by FIG. 14, the RRU 2 includes a radio signal transmitter 101, a radio signal receiver 102, a signal transmitter 103, a signal receiver 104, a measurer 105, and a generator 106. FIG. 14 illustrates only functional components of the RRU 2 that are particularly relevant to the present embodiment, and the RRU 2 may also at least include unshown functional components that are necessary for operations conforming to LTE. Also, the functional configuration of FIG. 14 is just an example. As long as operations related to the present embodiment can be performed, the categorization and the names of the functional components may be freely changed. Also, the RRU 2 may have a configuration that is sufficient to perform a part of the processes of the RRU 2 described above (e.g., processes according to one or more of the embodiments). For example, the generator 106 may be omitted from the RRU 2.

The radio signal transmitter 101 performs a physical layer process on a signal received via the signal receiver 104 from the BBU 1, and transmits a radio signal to the user device UE. The radio signal receiver 102 performs a physical layer process on a radio signal received from the user device UE and inputs the processed signal to the signal transmitter 103. Each of the radio signal transmitter 101 and the radio signal receiver 102 includes a function to perform an inverse FFT (IFFT) and FFT processes.

The radio signal transmitter 101 and the radio signal receiver 102 may be configured to perform transmission and reception processes (including the IFFT and FFT processes) of radio signals according to a frame timing (reference timing) that is common to the transmission and reception processes. Also, the radio signal transmitter 101 may be configured to store a frame timing used for downlink signal transmission, and to perform a transmission process (including the IFFT process) of a radio signal according to the frame timing used for the downlink signal transmission. Also, the radio signal receiver 102 may be configured to store a frame timing used for uplink signal reception, and to perform a reception process (including the FFT process) of a radio signal according to the frame timing used for the uplink signal reception.

Also, the radio signal transmitter 101 and/or the radio signal receiver 102 may include a function to perform congestion avoidance control for RA procedures. For example, the radio signal transmitter 101 may be configured to limit the number of random access procedure messages to be transmitted to a predetermined threshold. Also, when the number of messages received within a predetermined time period exceeds a predetermined threshold, the radio signal receiver 102 may be configured to discard messages received in excess of the predetermined threshold.

Also, the radio signal transmitter 101 may be configured to report, to the signal transmitter 103, that the number of random access procedure messages to be transmitted is limited to the predetermined threshold, and the signal transmitter 103 may be configured to report, to the BBU 1, that the number of random access procedure messages to be transmitted is limited to the predetermined threshold.

Also, the radio signal receiver 102 may be configured to report, to the signal transmitter 103, that the random access procedure messages have been discarded, and the signal transmitter 103 may be configured to report, to the BBU 1, that the random access procedure messages have been discarded.

The signal transmitter 103 transmits a signal received from the radio signal receiver 102 to the BBU 1 using a predetermined frame protocol used for FH. The signal receiver 104 extracts a signal from a predetermined frame protocol received from the BBU 1, and inputs the extracted signal to the radio signal transmitter 101. Each of the signal transmitter 103 and the signal receiver 104 includes a function as an interface for the predetermined frame protocol used for FH.

Also, when receiving a TA command from the BBU 1, the signal receiver 104 inputs the received TA command to the radio signal transmitter 101 or the generator 106.

Also, when receiving a timing adjustment command from the BBU 1, the signal receiver 104 inputs the received timing adjustment command to the radio signal receiver 102 and the generator 106. The signal receiver 104 may include an acquirer that obtains a timing adjustment command from the BBU 1. When receiving the timing adjustment command from the signal receiver 104, the radio signal receiver 102 shifts the frame timing for uplink signal reception by the amount of time indicated by the timing adjustment command.

The measurer 105 measures a reception timing error (or a timing difference) between the frame timing being managed by the RRU 2 and the reception timing of an uplink signal received from the user device UE. Also, the measurer 105 reports the measured reception timing error via the signal transmitter 103 to the BBU 1. Also, the measurer 105 may be configured to input the measured reception timing error to the generator 106.

The generator 106 generates a TA command based on a value indicating the reception timing error measured by the measurer 105. The generator 106 may be configured to generate a MAC PDU including a TA command MAC CE.

Also, the generator 106 may be configured to generate a MAC PDU including a TA command MAC CE when a TA command is received from the signal receiver 104.

Also, when a timing adjustment command is received from the signal receiver 104, the generator 106 may generate a MAC PDU including a TA command MAC CE that indicates a timing obtained by adding the amount of time indicated by the timing adjustment command. Also, the generator 106 may generate broadcast information including the amount of time indicated by the timing adjustment command, or generate DCI including the amount of time indicated by the timing adjustment command. The generator 106 transmits the generated TA command, the generated MAC PDU, the generated broadcast information, or the generated DCI via the radio signal transmitter 101 to the user device UE.

### (BBU)

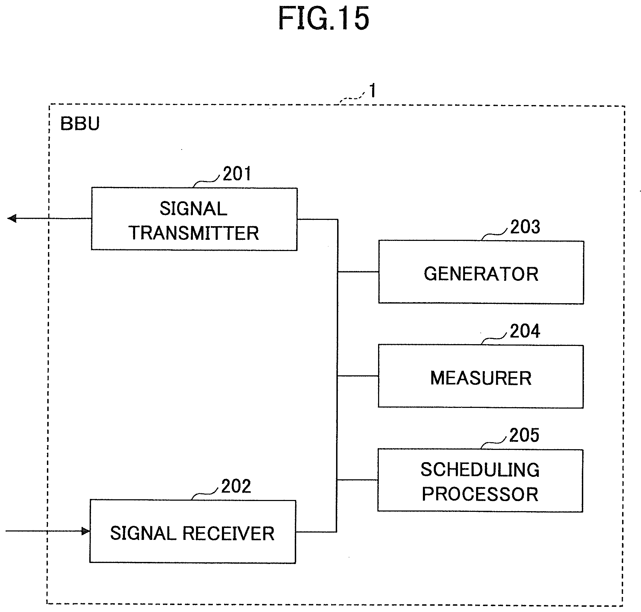

FIG. 15 is a drawing illustrating an example of a functional configuration of a BBU according to an embodiment. As illustrated by FIG. 15, the BBU 1 includes a signal transmitter 201, a signal receiver 202, a generator 203, a measurer 204, and a scheduling processor 205. FIG. 15 illustrates only functional components of the BBU 1 that are particularly relevant to the present embodiment, and the BBU 1 may also at least include unshown functional components that are necessary for operations conforming to LTE. Also, the functional configuration of FIG. 15 is just an example. As long as operations related to the present embodiment can be performed, the categorization and the names of the functional components may be freely changed. Also, the BBU 1 may have a configuration that is sufficient to perform a part of the processes of the BBU 1 described above (e.g., processes according to one or more of the embodiments).

The signal transmitter 201 includes a function to perform upper layer and layer 2 processing on data to be transmitted from the BBU 1 to generate a signal, and to transmit the generated signal to the RRU 2 using a predetermined frame protocol used for FH. The signal receiver 202 includes a function to extract a signal from a predetermined frame protocol received from the RRU 2, and to perform layer 2 and upper layer processing on the extracted signal to obtain data. Each of the signal transmitter 201 and the signal receiver 202 includes a function as an interface for the predetermined frame protocol used for FH.

The generator 203 generates a TA command based on a reception timing error that is received via the signal receiver 202 from the RRU 2 and indicates a difference between the frame timing being managed by the RRU 2 and the reception timing of an uplink signal received from the user device UE. Also, the generator 203 reports the generated TA command via the signal transmitter 201 to the RRU 2.

Also, when a report indicating that a measured reception timing error exceeds the maximum wait time (T) is received from the measurer 204, the generator 203 generates a timing adjustment command for causing the user device UE to further advance a transmission timing of an uplink signal, which is controlled by the TA control performed by the RRU 2, by a specified amount of time, and transmits the generated timing adjustment command via the signal transmitter 201 to the RRU 2.

The measurer 204 measures a reception timing error (or a timing difference) between the frame timing being managed by the BBU 1 and the reception timing of an uplink signal received by the signal receiver 202 from the user device UE. Also, the measurer 204 includes a function to determine whether the measured reception timing error is greater than the maximum wait time (T). The measurer 204 reports, to the generator 203, that the measured reception timing error is greater than the maximum wait time (T).

The scheduling processor 205 includes a function to perform scheduling (allocation of radio resources) for cells being managed by the BBU 1. Also, the scheduling processor 205 includes a function to perform hybrid automatic repeat request (HARQ).

The entire functional configuration of each of the RRU 2 and the BBU 1 described above may be implemented by a hardware circuit(s) (e.g., one or more IC chips). Alternatively, a part of the functional configuration may be implemented by a hardware circuit(s) and the remaining part of the functional configuration may be implemented by a CPU and programs.

### (RRU)

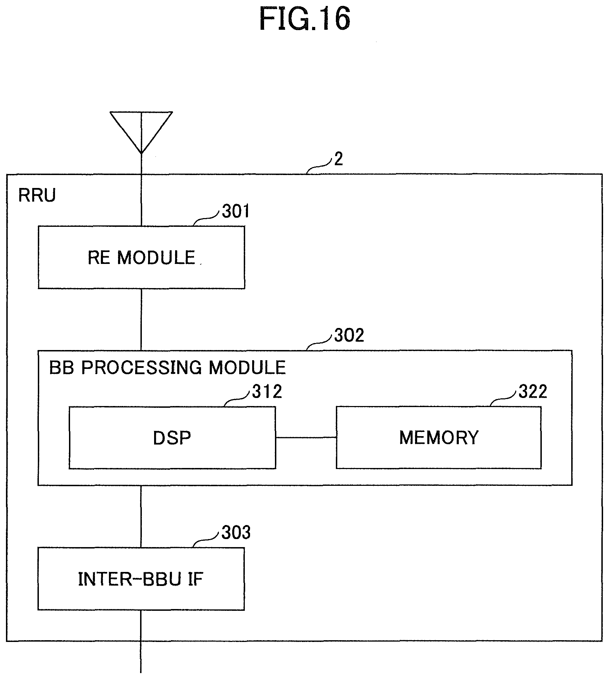

FIG. 16 is a drawing illustrating an example of a hardware configuration of an RRU according to an embodiment. FIG. 16 illustrates a configuration that is closer than FIG. 14 to an actual implementation. As illustrated by FIG. 16, the RRU 2 includes a radio equipment (RE) module 301 that performs processes related to radio signals, a baseband (BB) processing module 302 that performs baseband signal processing, and an inter-BBU IF 303 that is an interface for connection with the BBU 1.

The RE module 301 performs processes such as digital-to-analog (D/A) conversion, modulation, frequency conversion, and power amplification on a digital baseband signal received from the BB processing module 302 to generate a radio signal to be transmitted from an antenna. Also, the RE module 301 performs processes such as frequency conversion, analog-to-digital (A/D) conversion, and demodulation on a received radio signal to generate a digital baseband signal, and inputs the digital baseband signal to the BB processing module 302. The RE module 301 may include an RF function. The RE module 301 may include, for example, a part of the radio signal transmitter 101 and a part of the radio signal receiver 102 in FIG. 14.

The BB processing module 302 converts an IP packet into a digital baseband signal and vice versa. A digital signal processor (DSP) 312 is a processor that performs signal processing in the BB processing module 302. A memory 322 is used as a work area of the DSP 312. The BB processing module 302 may include, for example, a part of the radio signal transmitter 101, a part of the radio signal receiver 102, the measurer 105, and the generator 106 in FIG. 14.

The inter-BBU IF 303 includes a function to connect a physical line of FH that connects the BBU 1 and the RRU 2, and a function to terminate a predetermined frame protocol used for FH. The inter-BBU IF 303 may include, for example, the signal transmitter 103 and the signal receiver 104 in FIG. 14.

### (BBU)

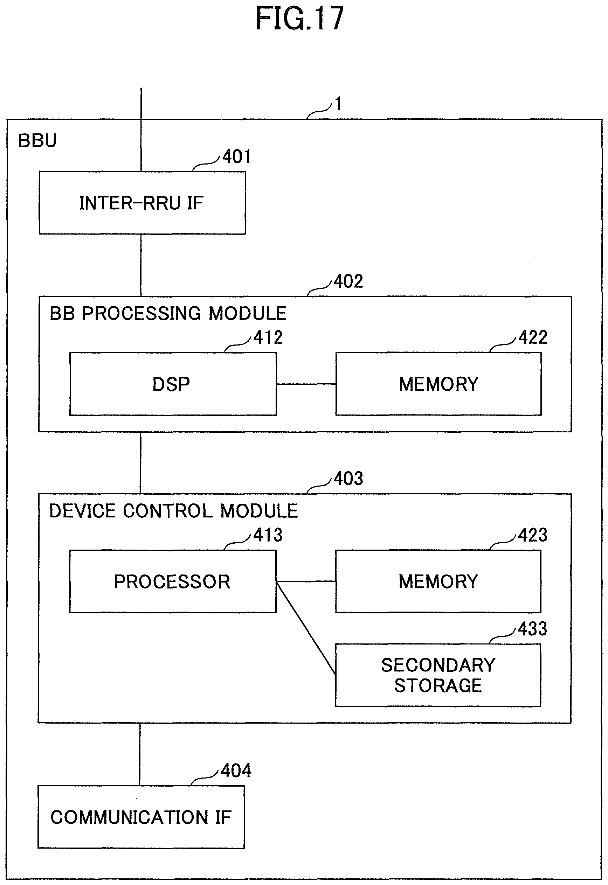

FIG. 17 is a drawing illustrating an example of a hardware configuration of a BBU according to an embodiment. FIG. 17 illustrates a configuration that is closer than FIG. 15 to an actual implementation. As illustrated by FIG. 17, the BBU 1 includes an inter-RRU IF 401 that is an interface for connection with the RRU 2, a BB processing module 402 that performs baseband signal processing, a device control module 403 that performs processes in upper layers, and a communication IF 404 that is an interface for connection with a network.

The inter-RRU IF 401 includes a function to connect a physical line of FH that connects the BBU 1 and the RRU 2, and a function to terminate a predetermined frame protocol used for FH. The inter-RRU IF 401 may include, for example, the signal transmitter 201 and the signal receiver 202 in FIG. 15.

The BB processing module 402 converts an IP packet into a digital baseband signal and vice versa. A DSP 412 is a processor that performs signal processing in the BB processing module 402. A memory 422 is used as a work area of the DSP 412. The BB processing module 402 may include, for example, a part of the signal transmitter 201, a part of the signal receiver 202, and the scheduling processor 205 in FIG. 15.

The device control module 403 performs protocol processing in the IP layer and operation and maintenance (OAM) processing. A processor 413 performs processes of the device control module 403. A memory 423 is used as a work area of the processor 413. A secondary storage 433 is, for example, an HDD and stores various settings for operations of the base station eNB itself. The device control module 403 may include, for example, a part of the generator 203 and a part of the measurer 204 in FIG. 15.

### <SUMMARY>

An embodiment of the present invention provides a base station used as a first base station in a radio communication system including the first base station, a second base station communicating via the first base station with a user device, and the user device communicating with the first base station. The base station includes a first receiver that receives an uplink signal transmitted from the user device; a measurer that measures a timing difference between a timing of receiving the uplink signal and a predetermined reference timing retained by the base station; and a first transmitter that transmits, to the user device, a command that is generated based on the timing difference and used to control a transmission timing at which the user device transmits the uplink signal. This base station provides a technology that enables proper communications in a radio communication network according to C-RAN.

The base station may also include a second transmitter that reports the measured timing difference to the second base station, and a second receiver that receives the command from the second base station. This configuration makes it possible to provide a function to perform a process of generating a TA command, which is a layer 2 (MAC layer) process, in the BBU 1, and thereby makes it possible to reduce the processing load and the development costs of the RRU 2.

The base station may also include a generator that generates the command based on the timing difference. This configuration makes it possible to reduce the processing load of the BBU.

The generator may be configured to generate the command when the timing difference is greater than or equal to a predetermined threshold. This configuration makes it possible to prevent the RRU 2 from unnecessarily transmitting a TA command to the user device UE even when the difference between the frame timing and the uplink signal reception timing is small. This in turn makes it possible to reduce the amount of signaling between the RRU 2 and the user device UE.

Also, when the number of random access procedure messages received within a predetermined time period exceeds a predetermined threshold, the first receiver may discard the random access procedure messages received in excess of the predetermined threshold. With this configuration, in a situation where a large number of user devices UE perform RA procedures at the same time, the RRU 2 can prevent an increase in its processing load. Also, this configuration makes it possible to limit the maximum processing capacity of the RRU 2 within a proper range, and thereby makes it possible to suppress development costs.

The first receiver may be configured to report to the second base station that the random access procedure messages have been discarded. This configuration enables the BBU 1 to recognize that a congestion control function is started at the RRU 2. Also, this configuration enables the BBU 1 to report, to a maintenance operator, that a congestion occurred at the RRU 2.

The base station may also include an acquirer that obtains, from the second base station, control information for causing the user device to further advance, by a specified amount of time, the transmission timing that is controlled by the command and at which the user device transmits the uplink signal. In this case, the first transmitter may be configured to transmit the specified amount of time included in the control information to the user device. This configuration enables the BBU 1 to secure an available processing time that is available for the BBU 1 to perform a scheduling process even when the transmission delay in FH is large. Also, this configuration makes it possible to limit the performance required for the BBU 1 to a certain level, and thereby makes it possible to suppress development costs of the BBU 1.

Another embodiment of the present invention provides a base station used as a second base station in a radio communication system including a first base station, the second base station communicating via the first base station with a user device, and the user device communicating with the first base station. The base station includes a receiver that receives, via the first base station, an uplink signal transmitted from the user device; a measurer that measures a timing difference between a timing of receiving the uplink signal and a predetermined reference timing retained by the base station; a generator that generates control information when the timing difference is greater than a predetermined wait time, the control information being used to cause the user device to further advance, by a specified amount of time, a transmission timing that is controlled by a timing alignment control performed by the first base station and at which the user device transmits the uplink signal; and a transmitter that transmits the control information to the first base station. This base station provides a technology that enables proper communications in a radio communication network according to C-RAN.

Another embodiment of the present invention provides a timing control method performed by a first base station in a radio communication system including the first base station, a second base station communicating via the first base station with a user device, and the user device communicating with the first base station. The method includes receiving an uplink signal transmitted from the user device; measuring a timing difference between a timing of receiving the uplink signal and a predetermined reference timing retained by the first base station; and transmitting, to the user device, a command that is generated based on the timing difference and used to control a transmission timing at which the user device transmits the uplink signal. This timing control method provides a technology that enables proper communications in a radio communication network according to C-RAN.

Another embodiment of the present invention provides a timing control method performed by a second base station in a radio communication system including a first base station, the second base station communicating via the first base station with a user device, and the user device communicating with the first base station. The method includes receiving, via the first base station, an uplink signal transmitted from the user device; measuring a timing difference between a timing of receiving the uplink signal and a predetermined reference timing retained by the second base station; generating control information when the timing difference is greater than a predetermined wait time, the control information being used to cause the user device to further advance, by a specified amount of time, a transmission timing that is controlled by a timing alignment control performed by the first base station and at which the user device transmits the uplink signal; and transmitting the control information to the first base station. This timing control method provides a technology that enables proper communications in a radio communication network according to C-RAN.

### <SUPPLEMENTARY DESCRIPTION OF EMBODIMENTS>

The order of steps described in each method claim is an example, and the steps may be performed in any other order unless otherwise mentioned.

Components of each apparatus (BBU 1, RRU 2) described in the above embodiments may be implemented by executing a program stored in a memory by a CPU (processor) of the apparatus, may be implemented by hardware such as hardware circuits including logic for the above-described processes, or may be implemented by a combination of programs and hardware.

Embodiments of the present invention are described above. However, the present invention is not limited to the above-described embodiments, and a person skilled in the art may understand that variations, modifications, and replacements may be made to the above embodiments. Although specific values are used in the above descriptions to facilitate the understanding of the present invention, the values are just examples and other appropriate values may also be used unless otherwise mentioned. Grouping of subject matter in the above descriptions is not essential for the present invention. For example, subject matter described in two or more sections may be combined as necessary, and subject matter described in one section may be applied to subject matter described in another section unless they contradict each other. Boundaries of functional units or processing units in functional block diagrams do not necessarily correspond to boundaries of physical components. Operations of multiple functional units may be performed by one physical component, and an operation of one functional unit may be performed by multiple physical components. The order of steps in sequence charts and flowcharts described in the embodiments may be changed unless they do not become inconsistent. Although functional block diagrams are used to describe the BBU 1 and the RRU 2, the BBU 1 and the RRU 2 may be implemented by hardware, software, or a combination of them. Software to be executed by a processor of the BBU 1 and software to be executed by a processor of the RRU 2 according to the embodiments of the present invention may be stored in any appropriate storage medium such as a random access memory (RAM), a flash memory, a read-only memory (ROM), an EPROM, an EEPROM, a register, a hard disk drive (HDD), a removable disk, a CD-ROM, a database, or a server.

In the above embodiments, the RRU 2 is an example of a first base station. The BBU 1 is an example of a second base station. The radio signal transmitter 101 is an example of a first transmitter. The radio signal receiver 102 is an example of a first receiver. The signal transmitter 103 is an example of a second transmitter. The signal receiver 104 is an example of a second receiver. The frame timing is an example of a predetermined reference timing. The signal receiver 104 is an example of an acquirer. The timing adjustment command is an example of control information. The maximum wait time (T) is an example of a predetermined wait time.

The present application is based on and claims the benefit of priority of Japanese Patent Application No. 2015-233524 filed on November 30, 2015, the entire contents of which are hereby incorporated herein by reference.

### EXPLANATION OF REFERENCE NUMERALS

eNB Base station
UE User device
1 BBU
2 RRU
101 Radio signal transmitter
102 Radio signal receiver
103 Signal transmitter
104 Signal receiver
105 Measurer
106 Generator
201 Signal transmitter
202 Signal receiver
203 Generator
204 Measurer
205 Scheduling processor
301 RE module
302, 402 BB processing module
303 Inter-BBU IF
401 Inter-RRU IF
403 Device control module
404 Communication IF

## Claims

1. A base station used as a first base station in a radio communication system including the first base station, a second base station communicating via the first base station with a user device, and the user device communicating with the first base station, the base station comprising:
a first receiver that receives an uplink signal transmitted from the user device;
a measurer that measures a timing difference between a timing of receiving the uplink signal and a predetermined reference timing retained by the base station; and
a first transmitter that transmits, to the user device, a command that is generated based on the timing difference and used to control a transmission timing at which the user device transmits the uplink signal.

2. The base station as claimed in claim 1, further comprising:
a second transmitter that reports the measured timing difference to the second base station; and
a second receiver that receives the command from the second base station.

3. The base station as claimed in claim 1, further comprising:
a generator that generates the command based on the timing difference.

4. The base station as claimed in claim 3, wherein the generator generates the command when the timing difference is greater than or equal to a predetermined threshold.

5. The base station as claimed in any one of claims 1 through 4, wherein when a number of random access procedure messages received within a predetermined time period exceeds a predetermined threshold, the first receiver discards the random access procedure messages received in excess of the predetermined threshold.

6. The base station as claimed in claim 5, wherein the first receiver reports to the second base station that the random access procedure messages have been discarded.

7. The base station as claimed in any one of claims 1 through 6, further comprising:
an acquirer that obtains, from the second base station, control information for causing the user device to further advance, by a specified amount of time, the transmission timing that is controlled by the command and at which the user device transmits the uplink signal,
wherein the first transmitter transmits the specified amount of time included in the control information to the user device.

8. A base station used as a second base station in a radio communication system including a first base station, the second base station communicating via the first base station with a user device, and the user device communicating with the first base station, the base station comprising:
a receiver that receives, via the first base station, an uplink signal transmitted from the user device;
a measurer that measures a timing difference between a timing of receiving the uplink signal and a predetermined reference timing retained by the base station;
a generator that generates control information when the timing difference is greater than a predetermined wait time, the control information being used to cause the user device to further advance, by a specified amount of time, a transmission timing that is controlled by a timing alignment control performed by the first base station and at which the user device transmits the uplink signal; and
a transmitter that transmits the control information to the first base station.

9. A timing control method performed by a first base station in a radio communication system including the first base station, a second base station communicating via the first base station with a user device, and the user device communicating with the first base station, the method comprising:
receiving an uplink signal transmitted from the user device;
measuring a timing difference between a timing of receiving the uplink signal and a predetermined reference timing retained by the first base station; and
transmitting, to the user device, a command that is generated based on the timing difference and used to control a transmission timing at which the user device transmits the uplink signal.

10. A timing control method performed by a second base station in a radio communication system including a first base station, the second base station communicating via the first base station with a user device, and the user device communicating with the first base station, the method comprising:
receiving, via the first base station, an uplink signal transmitted from the user device;
measuring a timing difference between a timing of receiving the uplink signal and a predetermined reference timing retained by the second base station;
generating control information when the timing difference is greater than a predetermined wait time, the control information being used to cause the user device to further advance, by a specified amount of time, a transmission timing that is controlled by a timing alignment control performed by the first base station and at which the user device transmits the uplink signal; and
transmitting the control information to the first base station.
